# EUROPEAN PATENT APPLICATION

(11) **EP 4 064 054 A1**
(43) Date of publication of application: **28.09.2022**
(21) Application number: 21190727.4
(22) Date of filing: 11.08.2021
(51) Int. Cl.: G06F 11/07

(54) **INFORMATION PROCESSING DEVICE, PROGRAM AND INFORMATION PROCESSING METHOD**

(30) Priority: 24.03.2021 JP 2021050356
(71) Applicant: Fujifilm Business Innovation Corp., Tokyo 107-0052 (JP)
(72) Inventor: ISAKA, Yoichi, Kanagawa, 220-8668 (JP)
(74) Representative: Parker, Andrew James

(57) **Abstract**

An information processing device includes a processor, and the processor: stores failure information; when a failure occurs in a series of processes executed in accordance with a definition of an order of plural unit processing units, presents failure information corresponding to the occurred failure among the failure information stored in the processor to a user; and when the failure information stored in the processor does not include failure information corresponding to the occurred failure, associate a unit processing unit where the failure has occurred and a unit processing unit preceding the unit processing unit where the failure has occurred with each other to be stored in the processor as a new failure information.

## Description

### Background

### 1. Technical Field

The present invention relates to an information processing device, a program and an information processing method.

### 2. Related Art

Japanese Patent No. 6547649 discloses an information processing device that includes: a receiving unit configured to receive, when a failure occurs in a job performed in accordance with a flow, a response to be applied to the job; an extracting unit configured to extract, from a storage unit storing plural jobs in which the failure has occurred, another job similar to processing of a previous stage in which the failure occurs in the flow; and a presenting unit configured to present the job extracted by the extracting unit and to present an instruction as to whether to apply the response to the job in a receivable manner.

Japanese Patent No. 6617472 discloses an information processing device that includes: a storage unit configured to store a type of an error in a job in which processing is performed by linking plural devices, a countermeasure process for the error, and information indicating whether the countermeasure process is necessary or selective in association with each other; a control unit configured to control the processing of the job that is instructed by a user; a detection unit configured to detect occurrence of the error during the processing of the job; an extracting unit configured to extract, from the storage unit, the error countermeasure process corresponding to the type of the error; an error processing unit configured to set the error countermeasure process extracted by the extracting unit as a job and cause the control unit to control processing of the job; a user detection unit configured to detect whether the user is around the information processing device; and a presenting unit configured to present plural the error countermeasure processes of the error processing unit to a presenting device provided in the information processing device when the user detection unit detects the user. The extracting unit extracts the error countermeasure process corresponding to the type of the error and the user who has issued the instruction to execute the job in which the error has occurred. The error processing unit notifies the user of the plural error countermeasure processes, sets an error countermeasure process selected by the user as a job and causes the control unit to control processing of the job. The error processing unit displays the user detected by the user detection unit and a screen corresponding to the error when selection is included in information corresponding to the error countermeasure process corresponding to the error type of the error detected by the detection unit, notifies the user instructing the job of an e-mail corresponding to the user and the error when the user is not detected by the user detection unit, and executes the error countermeasure process corresponding to the error type when the process of the selection is not included. Further, the error processing unit notifies a creator of the countermeasure process when the selection is included in the information corresponding to the error countermeasure process corresponding to the error type of the error detected by the detection unit while execution of the countermeasure process is not instructed by the user.

Japanese Patent No. 4928480 discloses a job processing system that performs batch processing on a job. The job processing system includes: a use resource information acquisition unit that acquires, from a registered job flow, use resource information in which a job to be processed in the job processing system and information on resources to be used by the job are associated with each other; a failure influence detection unit that refers to, when an abnormality occurs in any one of jobs being processed, the use resource information to specify a job related to a resource in which an error has occurred among the resources to be used by the job, and refers to processing order information of the job registered in advance based on the specified job, thereby detecting a related job among jobs to be processed thereafter as an influenced job; and an output unit that outputs information on the influenced job detected by the failure influence detection unit.

### SUMMARY

However, after release of a job flow control system, a new plug-in may be added and incorporated into a job flow. When a failure occurs during execution of the job flow to which the plug-in is added, the failure is treated as an unknown failure.

The job flow refers to a series of processes in which plural processes are executed in accordance with a predetermined order definition. The plug-in refers to a software that enables the execution of new processing in the job flow by being added to the job flow after the release.

An object of the present invention is to provide an information processing device, a program and an information processing method, which can provide appropriate information to a user when a failure occurs during a series of processes including a process added later by the user, as compared with a case where information on the failure is provided only based on information already stored before the addition of the process added by the user.

An information processing device of a first aspect of the present invention includes a processor, wherein the processor is configured to: store failure information; when a failure occurs in a series of processes executed in accordance with a definition of an order of plural unit processing units, present failure information corresponding to the occurred failure among the failure information stored in the processor to a user; and when the failure information stored in the processor does not include failure information corresponding to the occurred failure, associate a unit processing unit where the failure has occurred and a unit processing unit preceding the unit processing unit where the failure has occurred with each other to be stored in the processor as a new failure information.

According to an information processing device of a second aspect of the present invention, when the failure information stored in the processor includes a predetermined number, which is an integer of two or more, or more pieces of failure information in which a unit processing unit where the failure has occurred is same among the predetermined number or more pieces of failure information and a unit processing unit preceding the unit processing unit where the failure has occurred is same among the predetermined number or more pieces of failure information, the processor unifies the predetermined number or more pieces of failure information.

According to an information processing device of a third aspect of the present invention, the failure information includes information on failure occurrence status of the unit processing unit where the failure has occurred, and input information of the unit processing unit where the failure has occurred, and when the failure information stored in the processor includes a predetermined number, which is an integer of two or more, or more pieces of failure information in which a unit processing unit where the failure has occurred is same among the predetermined number or more pieces of failure information, a unit processing units preceding the unit processing unit where the failure has occurred is different among the predetermined number or more pieces of failure information, and the information on failure occurrence status and the input information are same among the predetermined number or more pieces of failure information, the processor unifies the predetermined number or more pieces of failure information.

According to an information processing device of a fourth aspect of the present invention, before executing the series of processes, the processor searches whether the definition includes a same definition as the failure information in which the unit processing unit where the failure has occurred and the unit processing unit preceding the unit processing unit where the failure has occurred are associated with each other, and presents a result of the search to the user.

According to an information processing device of a fifth aspect of the present invention, when the definition of the order of the plural unit processing units is registered, the processor searches whether the definition includes a same definition as the failure information in which the unit processing unit where the failure has occurred and the unit processing unit preceding the unit processing unit where the failure has occurred are associated with each other, and presents a result of the search to the user.

According to an information processing device of a sixth aspect of the present invention, when a definition of a combination of the plural unit processing units is registered, the processor searches whether the definition includes a same definition as the failure information in which the unit processing unit where the failure has occurred and the unit processing unit preceding the unit processing unit where the failure has occurred are associated with each other, and prohibits reception of processing from the user when a result of the search indicates that the failure information is included.

A program according to a seventh aspect of the present invention causes a computer to execute a process, wherein the process includes: storing failure information; when a failure occurs in a series of processes executed in accordance with a definition of an order of plural unit processing units, presenting failure information corresponding to the occurred failure among the stored failure information to a user, and when the stored failure information does not include failure information corresponding to the occurred failure, associating a unit processing unit where the failure has occurred and a unit processing unit preceding the unit processing unit where the failure has occurred with each other to be stored as new failure information.

An information processing method according to an eighth aspect of the invention includes: storing failure information; when a failure occurs in a series of processes executed in accordance with a definition of an order of plural unit processing units, presenting failure information corresponding to the occurred failure among the stored failure information to a user, and when the stored failure information does not include failure information corresponding to the occurred failure, associating a unit processing unit where the failure has occurred and a unit processing unit preceding the unit processing unit where the failure has occurred with each other to be stored as new failure information.

According to the first aspect, the seventh aspect or the eighth aspect of the present invention, the appropriate information can be provided to the user when the failure occurs during the series of processes including the process added later by the user, as compared with the case where the information on the failure is provided only based on the information already stored before the addition of the process added by the user.

According to the second aspect of the present invention, when there is a predetermined number or more pieces of failure information related to the association of the same unit processing unit where the failure has occurred and the same unit processing unit preceding the unit processing unit where the failure has occurred, the failure information can be provided to the user in an easy-to-understand manner as compared with a case where the predetermined number or more pieces of failure information are provided without unifying them.

According to the third aspect of the present invention, when there is a predetermined number or more pieces of failure information that are the same except for the association between the unit processing unit where the failure has occurred and the unit processing unit preceding the unit processing unit, the failure information can be provided to the user in an easy-to-understand manner as compared with a case where the predetermined number or more pieces of failure information are directly provided.

According to the fourth aspect of the present invention, the failure information can be provided to the user before executing the series of processes.

According to the fifth aspect of the present invention, the failure information can be provided to the user when the definition defining the series of processes is registered.

According to the sixth aspect of the present invention, the execution instruction of the processing can be prohibited when there is failure information in the case where the definition defining the series of processes is registered.

### Brief Description of the Drawings

Exemplary embodiments of the present invention will be described in detail based on the following figures, wherein:
Fig. 1 is a block diagram showing an entire information processing system according to an exemplary embodiment of the present invention;
Fig. 2 is a block diagram showing hardware of the information processing device according to the exemplary embodiment of the present invention;
Fig. 3 is a block diagram showing a software configuration and a function of the information processing device according to the exemplary embodiment of the present invention;
Fig. 4 is a flowchart showing an operation flow of an entire information processing device according to a first exemplary embodiment of the present invention;
Fig. 5 is an explanatory diagram showing a specific example of a job flow according to the first exemplary embodiment of the present invention;
Fig. 6 is a flowchart showing a normal operation flow of a specific example of the first exemplary embodiment of the present invention;
Fig. 7 is a flowchart showing an operation flow when an error occurs in the first exemplary embodiment of the present invention;
Fig. 8 is an explanatory diagram showing a state where data is added to a management table of a database of the first exemplary embodiment of the present invention;
Fig. 9 is an explanatory diagram showing a state where data is provided from the management table of the database of the first exemplary embodiment of the present invention;
Fig. 10 is a flowchart showing an operation flow when an error occurs in a second exemplary embodiment of the present invention;
Fig. 11 is an explanatory diagram showing a third exemplary embodiment of the present invention;
Fig. 12 is a flowchart showing an operation flow of the third exemplary embodiment of the present invention;
Fig. 13 is a table showing a list of input information at the time of a normal end in a fourth exemplary embodiment of the present invention;
Fig. 14 is a table showing a list of error substitution information in the fourth exemplary embodiment of the present invention;
Fig. 15 is a flowchart showing an operation flow of the fourth exemplary embodiment of the present invention;
Fig. 16 is an explanatory diagram showing a fifth exemplary embodiment of the present invention;
Fig. 17 is an explanatory diagram showing a sixth exemplary embodiment of the present invention;
Fig. 18 is a flowchart showing an operation flow of the sixth exemplary embodiment of the present invention;
Fig. 19 is an explanatory diagram showing contents of an error substitution E in a seventh exemplary embodiment of the present invention;
Fig. 20 is an explanatory diagram showing an example of a job flow having a part common to the error substitution E in the seventh exemplary embodiment of the present invention;
Fig. 21 is a flowchart showing an operation flow of the seventh exemplary embodiment of the present invention; and
Fig. 22 is a flowchart showing an operation flow of an eighth exemplary embodiment of the present invention.

### Detailed Description

Next, exemplary embodiments of the present invention will be described in detail with reference to the drawings.

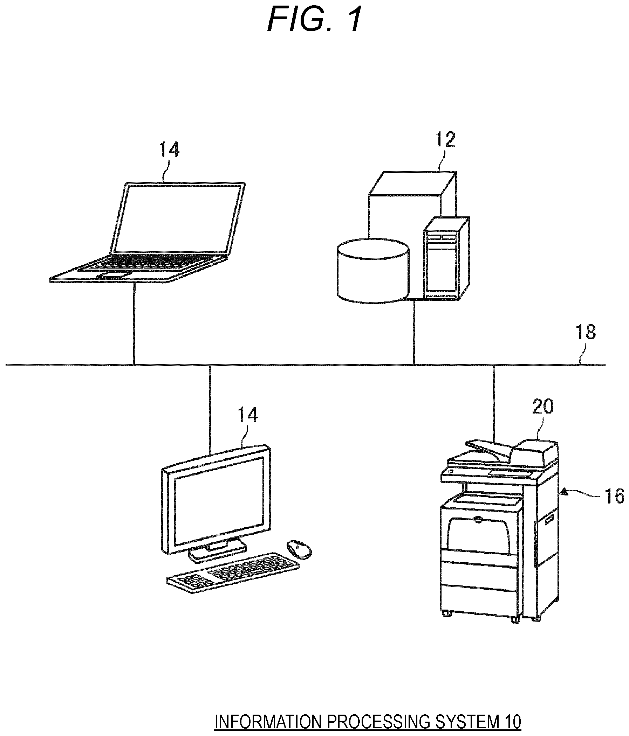

Fig. 1 shows an entire information processing system 10 according to the exemplary embodiment of the present invention.

In the information processing system 10, a server 12, personal computers 14, 14, and an image forming device 16, which constitute an information processing device, are connected to each other via a network 18. The image forming device 16 is a so-called multifunction device having a printing function, a facsimile function, a scanning function, and the like, and is provided with an image reading device 20 that is equipped with an automatic document feeding device. The network 18 may be a local area network or the Internet.

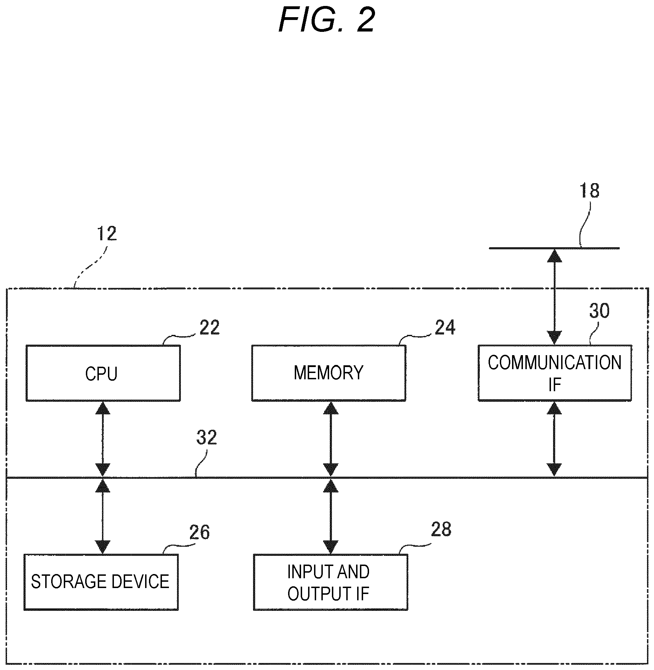

Fig. 2 is a block diagram showing hardware of the server 12.

The server 12 includes a central processing unit (CPU) 22 that is a processor, a memory 24, a storage device 26, an input and output interface 28, and a communication interface 30. The CPU 22, the memory 24, the storage device 26, the input and output interface 28, and the communication interface 30 are connected via a bus 32.

The CPU 22 executes predetermined processing based on a control program stored in the memory 24. The storage device 26 is configured by, for example, a hard disk, and stores necessary software and data. The storage device 26 stores a document, a job flow definition, and the like.

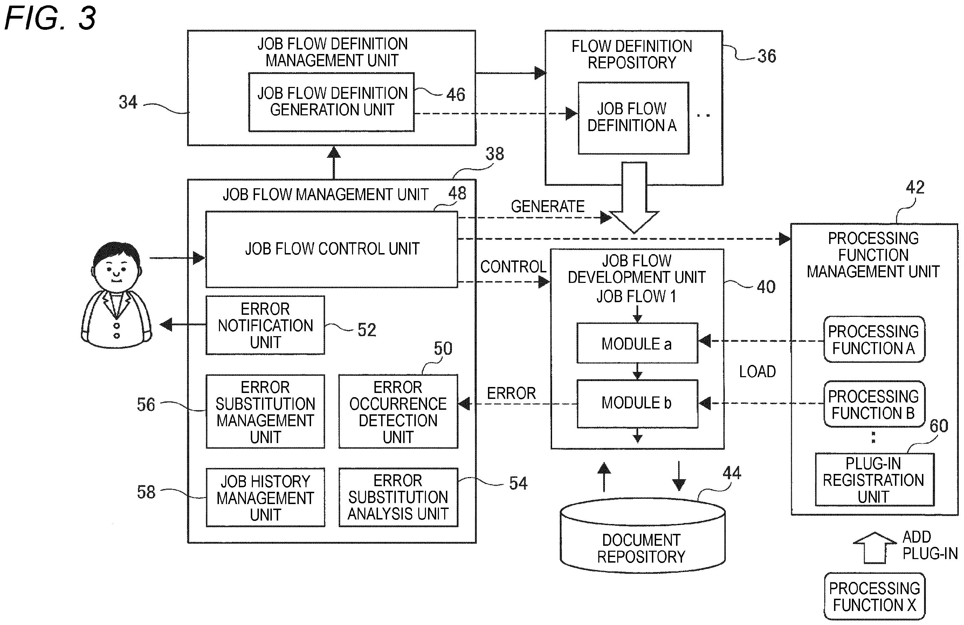

Fig. 3 is a block diagram showing a software configuration and a function of the server 12.

The server 12 includes a job flow definition management unit 34, a flow definition repository 36, a job flow management unit 38, a job flow development unit 40, a processing function management unit 42, and a document repository 44.

A repository refers to a data storage unit. The flow definition repository 36 stores job flow definition data, and the document repository 44 stores document data to be processed and processed document data.

The job flow definition management unit 34 includes a job flow definition generation unit 46. A job flow definition serving a template of a job flow is generated. The job flow generated by the job flow definition generation unit 46 is stored in the flow definition repository 36.

The job flow management unit 38 includes a job flow control unit 48, an error occurrence detection unit 50 (hereinafter, a failure is referred to as an error), an error notification unit 52, an error substitution analysis unit 54, an error substitution management unit 56, and a job history management unit 58.

The job flow control unit 48 develops the job flow in the job flow development unit 40 based on the job flow definition managed by the flow definition repository 36, and controls transition and states between processing modules according to various triggers.

When an error occurs during execution of the job, the error occurrence detection unit 50 has a function of detecting a pattern of the occurring error (for example, an error occurrence address or log output data) and serving as a trigger of error notification.

The error notification unit 52 receives error detection performed by the error occurrence detection unit 50. If the error is an error incorporated in the system, the error notification unit 52 directly notifies the error, and if not, the error notification unit 52 notifies the error in accordance with a search result of the error substitution management unit 56. If no error substitution is found, error substitution registration is prompted (error substitution information that is registered automatically may also be notified). When an error substitution is found, the found error substitution is notified.

The error substitution analysis unit 54 analyzes information managed by the error substitution management unit 56 at predetermined timing, and performs integration of error substitutions or notification for prompting the integration.

The error substitution as used herein refers to an example of failure information. The error substitution is not error data but data indicating conditions under which the error has occurred. The error substitution is defined for an error that occurs due to addition of a plug-in.

The error substitution management unit 56 has a function of associating an error occurrence module, an error occurrence pattern, input information, and a combination of module preceding the error occurrence module in the flow (hereinafter referred to as a set of preceding module) with error substitution information so as to enable addition, update, and search of the same.

The job flow development unit 40 is a memory area in which the job flow selected from the flow definition repository 36 by the job flow control unit 48 is developed by loading a function from the processing function management unit 42. For example, in a case of a job flow 1, processing modules to be executed in the job flow are sequentially developed, firstly a module a, then a module b, and so on. Each module is an example of a unit processing unit.

The processing function management unit 42 manages processing functions registered in forms of various libraries or the like, and develops a designated processing function in the job flow development unit 40 as the processing module to be executed in the job flow in accordance with an instruction from the job flow control unit 48. The processing function management unit 42 includes a plug-in registration unit 60. For example, a plug-in having a processing function X is registered in the plug-in registration unit 60. There are cases where a processing function is added to the plug-in, and cases where a new processing function is imparted to a processing function that has already been registered. The document repository 44 stores documents to be processed and processed documents.

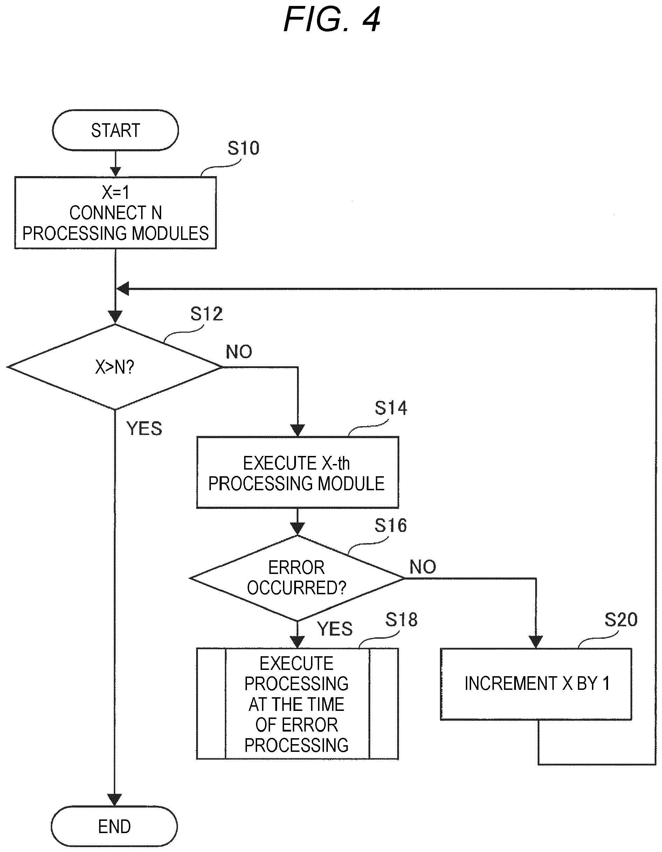

Fig. 4 shows an operation flow of the entire information processing device according to the first exemplary embodiment.

First, in step S10, N processing modules that constitute a job flow are connected. X represents an order of the processing modules. In step S10, X is set to 1.

In the following step S12, it is determined whether X > N. If it is determined in step S12 that X > N, the process is ended since all the processing modules have been executed. On the other hand, when it is determined in step S12 that X > N is not satisfied, the process proceeds to step S14.

In step S14, an X-th processing module is executed, and the process then proceeds to step S16. In step S16, it is determined whether any error has occurred. When it is determined in step S16 that an error has occurred, the process proceeds to step S18, and processing at the time of error processing, which will be described later below, is executed. On the other hand, when it is determined in step S16 that no error occurs, the process proceeds to step S20, X is incremented by 1, and the process returns to step S12.

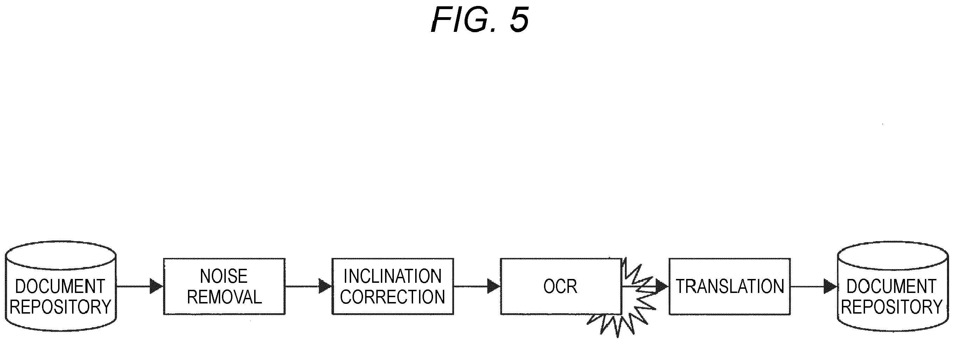

Fig. 5 shows a specific example of the first exemplary embodiment.

In this specific example, target document data is extracted from the document repository 44, subjected to noise removal, inclination correction, OCR (abbreviation of optical character reader, herein refers to a process of converting image data to character data), and translation, and then stored in the document repository 44.

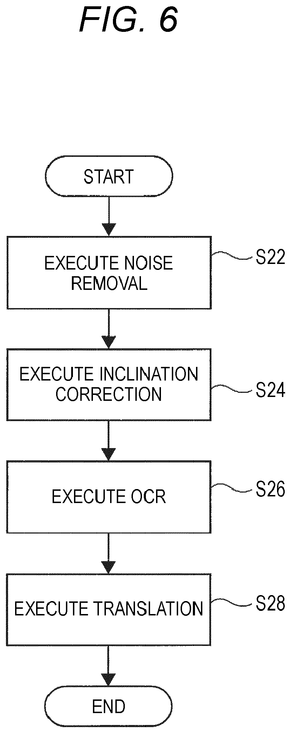

That is, during normal processing, as shown in Fig. 6, the noise removal is executed in step S22, the inclination correction is executed in step S24, the OCR is executed in step S26, the translation is executed in step S28, and then the process is ended.

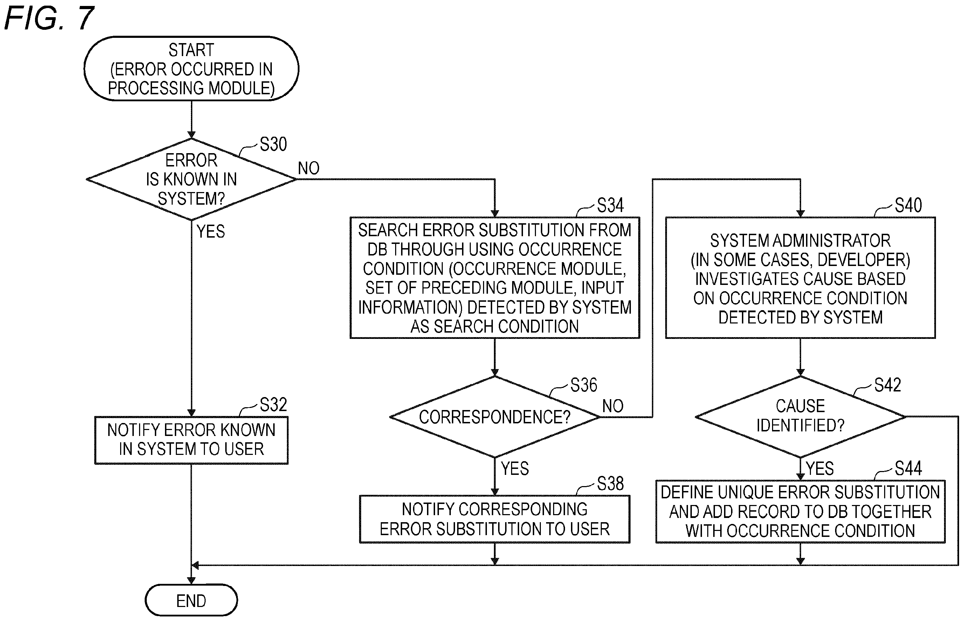

Fig. 7 shows details of the processing at the time of the error processing in the above-described steps.

When an error occurs in the processing module, first, in step S30, it is determined whether the error is known in the system. When it is determined in step S30 that the error is known, the process proceeds to step S32, and the error which is known in the system is notified to a user. Here, the error is known means that the error has already been registered in a device in the job flow management system, for example. In other words, the known error means, for example, an error that is not caused by addition of a new plug-in.

On the other hand, when it is determined in step S30 that the error is not known in the system (is an unknown error), the process proceeds to step S34. In step S34, the error substitution is searched from the database through using an occurrence condition (an occurrence module, a set of preceding module, input information, and the like) detected by the system as a search condition. Here, the set of preceding module is an example of a preceding unit processing unit, and refers to one or more modules preceding the occurrence module that is a module in which an error has occurred in the job flow.

The generation condition will be described in detail later below.

In the following step S36, it is determined whether the error that has occurred corresponds to any error substitution. The error substitution corresponds to the occurring error refers, for example, to a case where the occurrence condition of the occurring error matches an occurrence condition of the error substitution that is already added to the database. When it is determined in step S36 that there is correspondence, the process proceeds to step S38, and the corresponding error substitution is notified to the user.

On the other hand, when it is determined in step S36 that the occurring error does not correspond to any error substitution, the process proceeds to step S40. In step S40, a system administrator (in some cases, a developer) investigates a cause based on the occurrence condition detected by the system. In the following step S42, it is determined whether the cause can be identified. If the cause cannot be identified in step S42, the process is ended while the error is treated as an unknown error. On the other hand, if the cause can be identified in step S42, the process proceeds to step S44. In step S44, a unique error substitution is defined, a record is added to the database together with the occurrence condition, and then the process is ended.

Next, a specific example of a case where an unknown error occurs will be described.
In Fig. 5, it is assumed that an error occurs in an OCR processing module.

In step S40 described above, the input information, the error occurrence pattern, and the set of preceding module is investigated for the error of the OCR module. As a result, in a case where the cause can be identified, the error substitution is registered in the database in step S44.

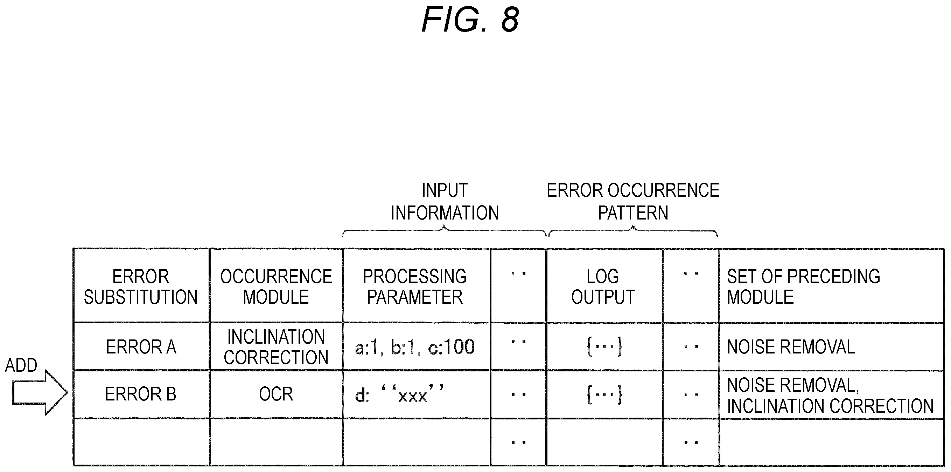

Fig. 8 shows a data structure example of a management table of the database.
The input information includes a processing parameter, an input file hash value, and the like. The error occurrence pattern includes log output information, an error occurrence address, and the like. The preceding module is a module processed before the processing module in which the error has occurred, and in this case includes a noise removal module and an inclination correction module preceding the OCR processing module where the error has occurred. Here, the error substitution is registered as an error B.

Next, it is assumed that the job flow is executed under the same conditions.

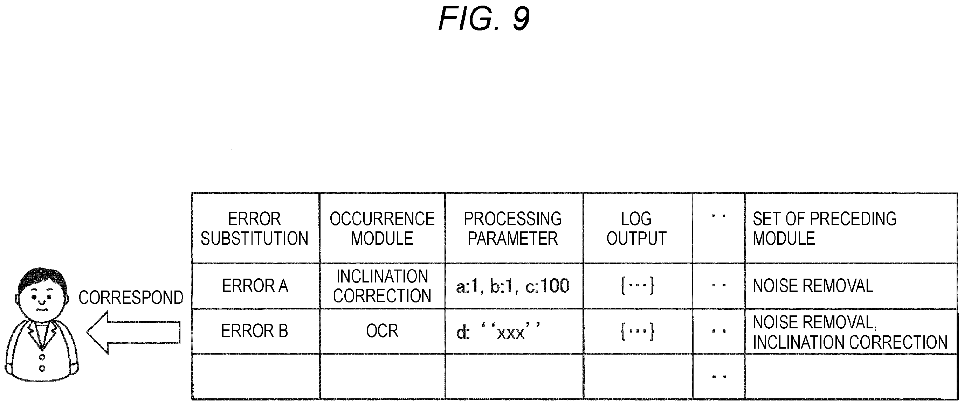

Then the error occurs in the OCR processing module, and the database is searched in step S34. The error B is corresponded in the following step S36. As shown in Fig. 9, the error B is presented to the user in step S38. Although an occurrence condition of the error B can be directly presented to the user, an explanation about the occurrence condition may be added to indicate a cause of occurrence.

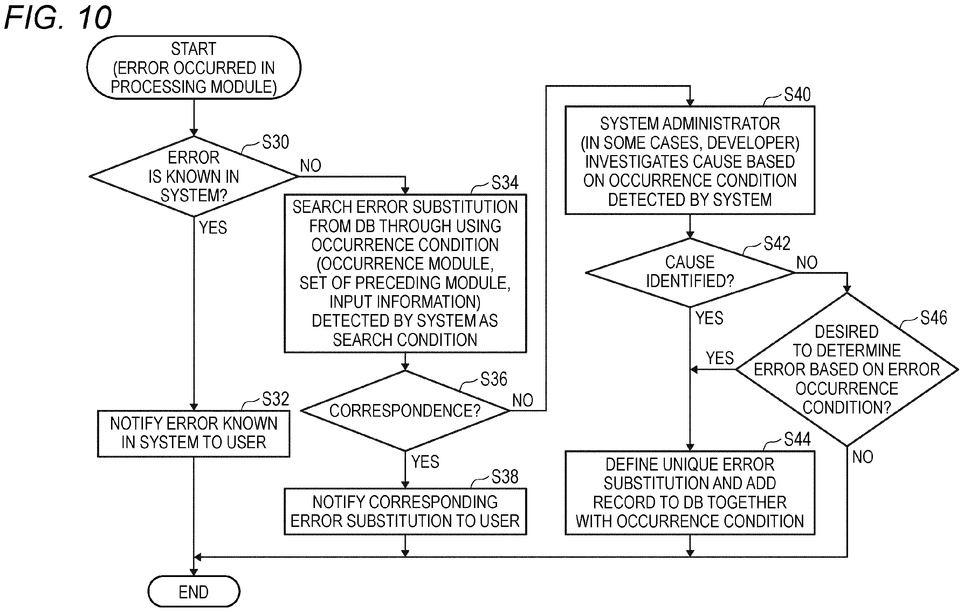

Fig. 10 shows an operation flow of the entire information processing device according to a second exemplary embodiment.

The second exemplary embodiment includes step S46, which is different from the first exemplary embodiment. In the first embodiment, the error is processed as the unknown error when the cause of the error cannot be identified, while the process proceeds to step S46 in the second embodiment when the cause cannot be identified in step S42.

In step S46, it is determined whether it is desired to determine the error based on the error occurrence condition. A determination condition thereof is determined by setting, and may be set to be always true or false, or may be set to be true in a case of a specific processing module. In the next and subsequent processes, it is conceivable to make it possible to identify errors under the same conditions and use the same to identify causes in the future. When the error is determined based on the error occurrence condition in step S46, the process proceeds to step S44, the unique error substitution is defined, and the record is added to the database together with the occurrence condition.

The same steps as those in the first exemplary embodiment are denoted by the same reference numerals as those in Fig. 7, and description thereof will be omitted.

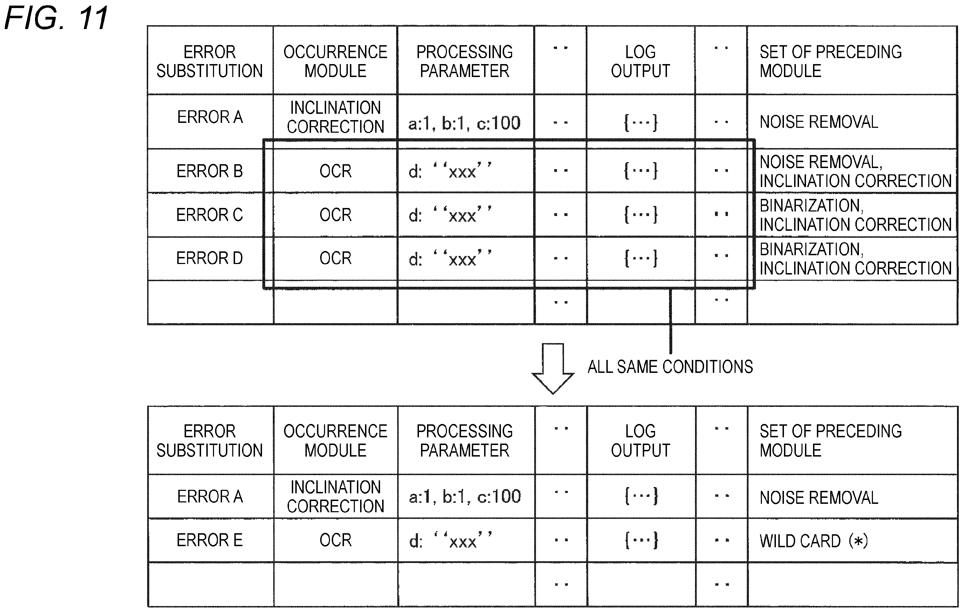

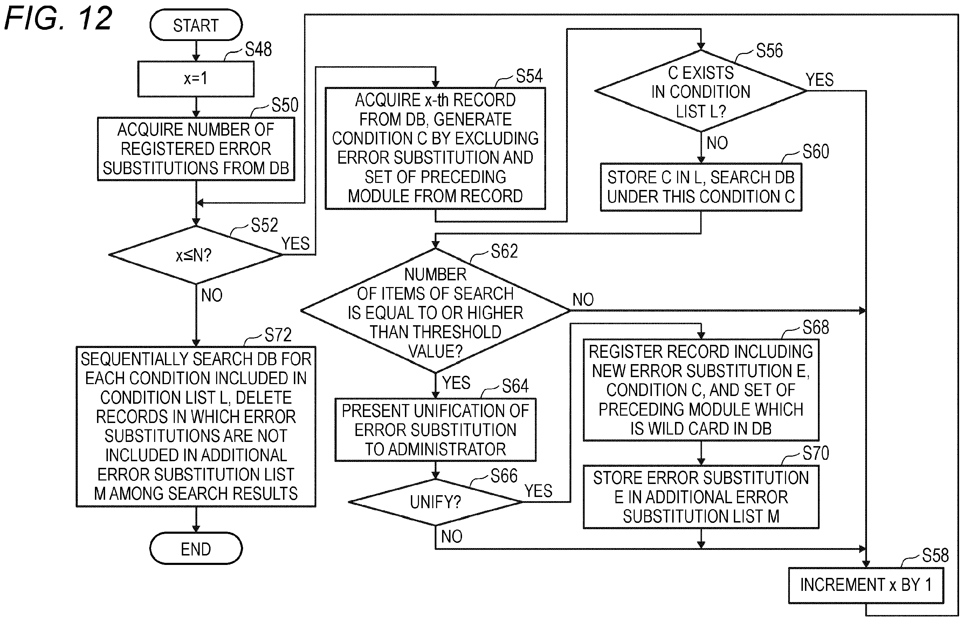

Figs. 11 and 12 show a third exemplary embodiment.

In the third exemplary embodiment, a process of unifying error substitutions is performed in the database based on data other than the set of the preceding module.

That is, as shown in Fig. 11, the error B, an error C, and an error D have the same data other than the set of the preceding module, such as the generation module, the processing parameter that is the input information, and the log output that is the error generation pattern. The error B, the error C, and the error D that are under the same conditions are unified as an error E. That is, in this case, since there is plural error substitutions in which the data other than the set of the preceding module matches as the error occurrence condition, it can be estimated that the error occurs regardless of the preceding module, and it is presented that the error substitutions are unified, or the unification is executed. Since it is determined that the error E matches regardless of the set of the preceding module, the set of the preceding module is registered as a wild card. Such unification processing is performed at predetermined timing. For example, the timing may be timing when the number of error substitutions, in which the data other than the set of the preceding module matches as the error occurrence condition, reaches a predetermined number.

Fig. 12 shows an operation flow of the third exemplary embodiment.

First, in step S48, x = 1 is set. Whereas x indicates an order of the record of the error substitution registered in the database, and thus x = 1 refers to a record of an error substitution registered at first in the database.

In the following step S50, the number of registered error substitutions N is acquired from the database. In the following step S52, it is determined whether x ≤ N. If it is determined in step S52 that x ≤ N, it means that the search has not been completed for all the error substitutions, and the process proceeds to step S54. In step S54, an x-th record is acquired from the database, and a condition C is generated by excluding the error substitution and the set of the preceding module from the record.

In the following step S56, it is determined whether the condition C generated in step S54 exists in a condition list L. In step S56, when it is determined that the condition C exists in the condition list L, the process proceeds to step S58, x is incremented by 1, and then the process returns to step S52.

In step S56, when it is determined that the condition C does not exist in the condition list L, the process proceeds to step S60, the condition C is stored in the condition list L, and the database is searched under this condition.

In the following step S62, it is determined whether the number of items of the search, which is a result of the search in step S60, is equal to or higher than a predetermined threshold value. In step S62, when the number of items of the search is not equal to or higher than the threshold value, that is, when the number of items of the search does not satisfy the threshold value, the process proceeds to step S58, x is incremented by 1, and the process returns to step S52. On the other hand, when it is determined in step S62 that the number of items of the search is equal to or higher than the threshold value, the process proceeds to step S64, and the unification of the error substitution is presented to the administrator.

In the following step S66, it is determined whether the administrator has instructed the unification of the error substitution. When the unification is not instructed, the process proceeds to step S58, x is incremented by 1, and the process returns to step S52. On the other hand, when it is determined in step S66 that the administrator has instructed the unification of the error substitution, the process proceeds to step S68, and a record including the new error substitution E, the condition C, and the set of the preceding module which is the wild card is registered in the database. Further, in the following step S70, the error substitution E is stored in an additional error substitution list M, the process proceeds to step S58, x is incremented by 1, and the process returns to step S52.

When x is incremented by such processing, it is finally determined in step S52 that x ≤ N is not satisfied, and the processing of the number of items of the registration N is ended. When it is determined in step S52 that x ≤ N is not satisfied, the process proceeds to step S72, the database is sequentially searched for each condition included in the condition list L, records in which error substitutions are not included in the additional error substitution list M among search results are deleted, and the process is ended. As a result, the database in which the error substitutions are unified as shown in Fig. 11 is formed.

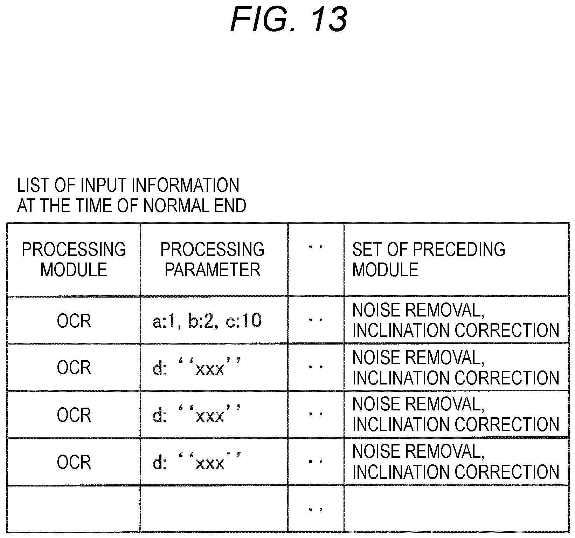

Figs. 13 to 15 show a fourth exemplary embodiment.

In the fourth exemplary embodiment, when an error substitution occurrence pattern is satisfied, notification is performed before execution of a processing module.

In the fourth exemplary embodiment, as shown in Fig. 13, a list of input information at the time of a normal end is created. The list of input information at the time of the normal end includes a processing module, a processing parameter, and a set of preceding modules.

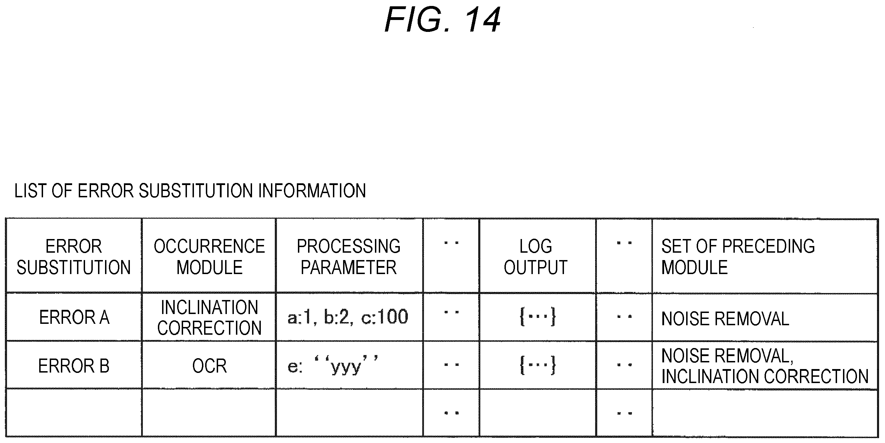

Here, it is assumed that a job flow similar to the job flow shown in Fig. 5 is executed. That is, the processes of the noise removal, the inclination correction, the OCR, and the translation are sequentially performed. However, the processing parameter is e: "yyy". Meanwhile, as shown in Fig. 14, an error substitution in which the occurrence module is OCR, the processing parameter is e: "yyy", and the set of the preceding module is "noise removal and inclination correction" is registered in a list of error substitution information as the error B.

Therefore, although the error may occur in OCR in the job flow to be executed, the error is more likely to occur since the processing parameter e: "yyy" is not included in the processing parameter at the time of the normal end. In such a case, the error substitution B is notified to the user, for example, without executing OCR.

However, in order to further improve accuracy, this notification may also be activated after the number of times of normal ends and the number of times of occurrence of error substitution after execution of the OCR exceeds predetermined threshold values. The notification may also be presented not only to the user but also to the administrator to indicate possibility of specification deficiency.

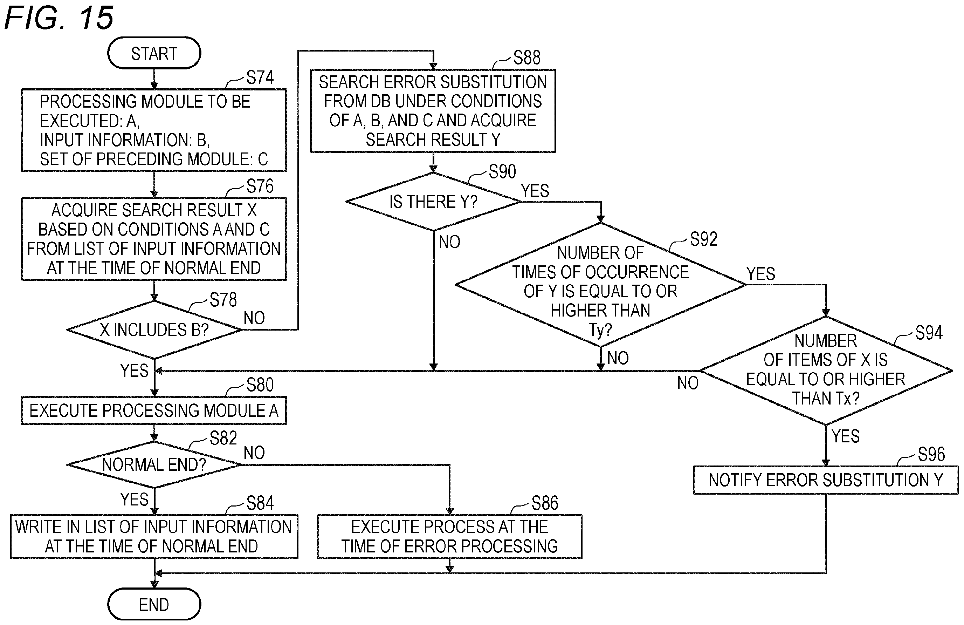

Fig. 15 shows an operation flow of the fourth exemplary embodiment.

First, in step S74, the processing module to be executed is set to be A (OCR in the specific example described above), the input information is set to be B (e: "yyy" in the specific example described above), and the set of the preceding module is set to be C (the noise removal and the inclination correction in the specific example described above). In the following step S76, the search result X is acquired, based on the conditions A and C, from the list of input information at the time of the normal end.

In the following step S78, it is determined whether X includes B. In step S78, when it is determined that X includes B, the process proceeds to step S80, and the processing module A is executed. In the following step S82, it is determined whether the normal end is achieved. In step S82, when it is determined that the normal end is achieved, the process proceeds to the following step S84, each piece of data is written in the list of input information at the time of the normal end, and then the process is ended. On the other hand, when it is determined in step S82 that the normal end is not achieved, that is, an error has occurred, the process at the time of the error processing described above is executed in the following S86, and then the process is ended.

When it is determined in step S78 that X does not include B, the process proceeds to step S88, the error substitution is searched from the database under the conditions of A, B, and C, and a search result Y is acquired. In the following step S90, it is determined whether Y is present. When it is determined in step S90 that Y is absent, the process proceeds to step S80, and the processing module A is executed. On the other hand, when it is determined in step S90 that Y is present, the process proceeds to step S92. In step S92, it is determined whether the number of times of occurrence of Y is equal to or higher than Ty. Ty is the number of times of occurrence set for each error substitution. If it is determined in step S92 that the number of times of occurrence of Y is less than Ty, the process proceeds to step S80, and the processing module A is executed. On the other hand, if it is determined in step S92 that the number of times of occurrence of Y is equal to or higher than Ty, the process proceeds to step S94. In step S94, it is determined whether the number of items of X is equal to or higher than Tx. Tx is the number of times of normal execution set for each combination of A and C. When it is determined in step S94 that the number of items of X is equal to or higher than Tx, the process proceeds to step S96, the error substitution Y is notified, and then the process is ended. On the other hand, when it is determined in step S94 that the number of items of X is less than Tx, the process proceeds to step S80, and the processing module A is executed.

Ty and Tx which serve as the threshold values may also be set uniformly instead of being set for each error substitution or for each combination of A and C.

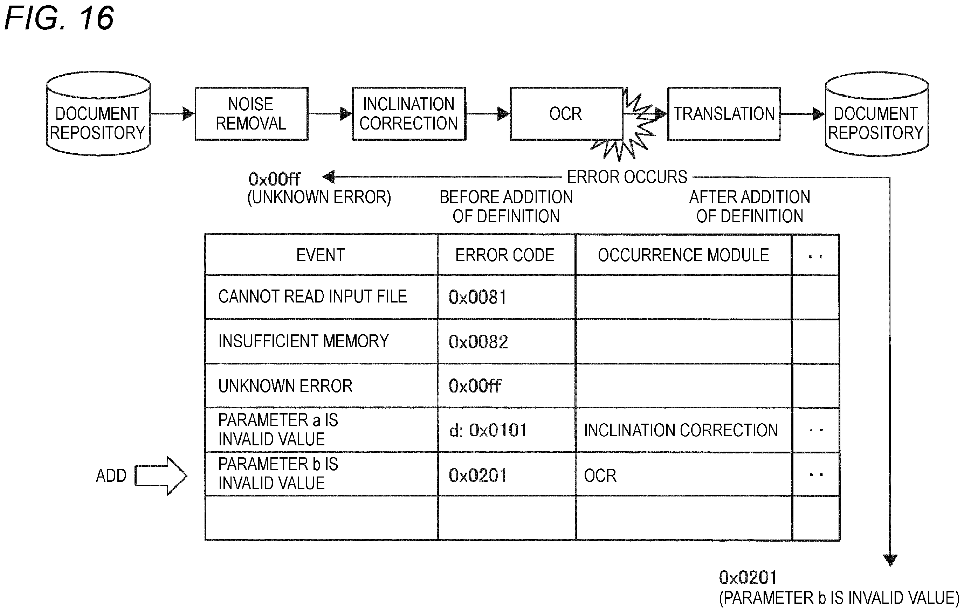

Fig. 16 shows an outline of a fifth exemplary embodiment.

In the fifth exemplary embodiment, an error code and an event are defined for an unknown error.

For example, when an error occurs in OCR, OxOOff is recorded in the database as an unknown error before a definition is added, and then the definition is added. The definition is added to the database as an error code OxO201. "Parameter b is an invalid value" is additionally registered as an event in the added error code OxO201, and a failure countermeasure that can be uniquely identified is executed. For example, when an external system receives such an error code, since the event has already been identified, there is no need for the external system to analyze error information (log or the like).

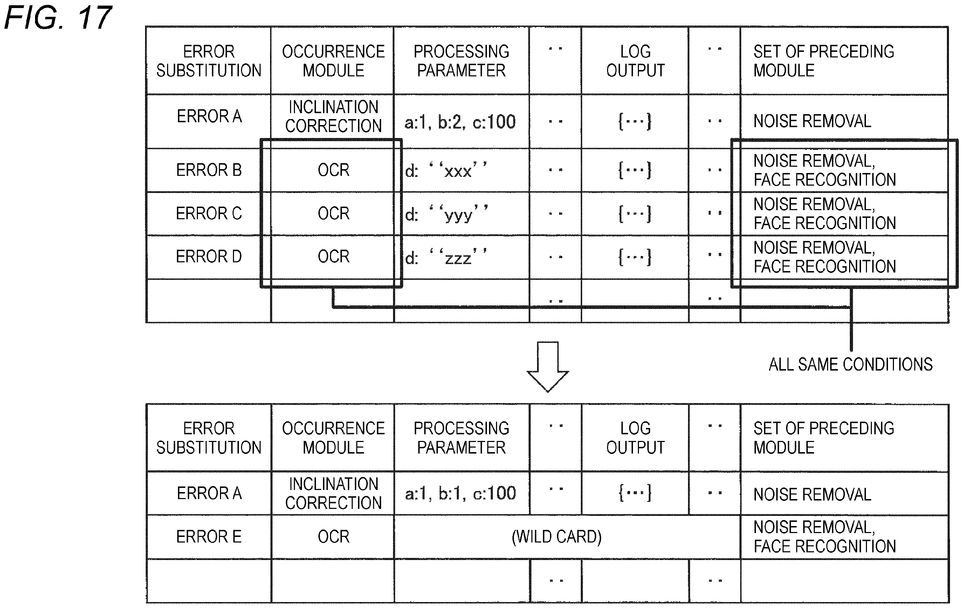

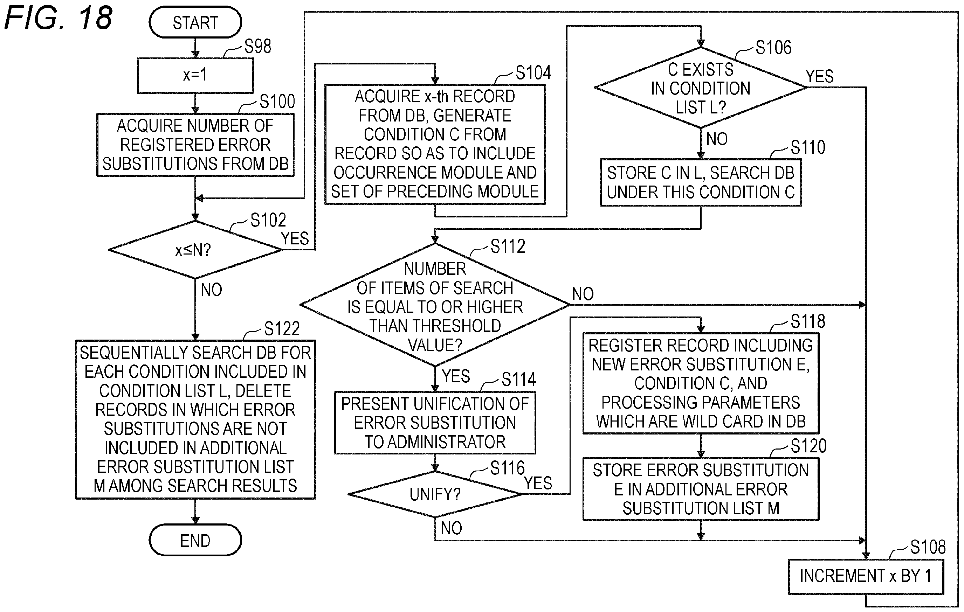

Figs. 17 and 18 show a sixth exemplary embodiment.

In the sixth exemplary embodiment, the process of unifying the error substitutions is performed in the database based on data of the occurrence module and the set of the preceding module.

As shown in Fig. 17, for example, in a case where the occurrence module is the OCR while a large number of error substitutions such as the error B, the error C, and the error D, in which the sets of the preceding modules are noise removal and face recognition, are registered, it can be inferred that the set of the preceding module is an invalid flow definition that causes the occurrence of the error when input information other than the occurrence module and the set of the preceding module (for example, the processing parameter) and the error occurrence pattern (for example, the log output) are different, and thus the error substitutions are presented to be the same or the error substitutions are made to be the same. Here, the input information and the error occurrence pattern are unified as the error substitution E that is a wild card.

As in the fourth exemplary embodiment described above, the list of input information at the time of the normal end is created, and it may be confirmed that there is no corresponding pattern in the list of input information at the time of the normal end. Instead of setting the input information and the error occurrence pattern to be the wild card, a flag may be provided to determine matching regardless of the occurrence module and the set of the preceding module.

Fig. 18 shows an operation flow of the sixth exemplary embodiment.

First, in step S98, x = 1 is set. Whereas x indicates an order of the record registered in the database, and thus x = 1 refers to a record registered at first in the database.

In the following step S100, the number of registered error substitutions N is acquired from the database. In the following step S102, it is determined whether x ≤ N. If it is determined in step S102 that x ≤ N, it means that the search has not been completed for all the error substitutions, and the process proceeds to step S104. In step S104, an x-th record is acquired from the database, and the condition C is generated from the record so as to include the occurrence module and the set of the preceding module.

In the following step S106, it is determined whether the condition C generated in step S104 exists in the condition list L. In step S106, when it is determined that the condition C exists in the condition list L, the process proceeds to step S108, x is incremented by 1, and then the process returns to step S102.

In step S106, when it is determined that the condition C does not exist in the condition list L, the process proceeds to step S110, the condition C is stored in the condition list L, and the database is searched under this condition.

In the following step S112, it is determined whether the number of items of the search, which is a result of the search in step S110, is equal to or higher than a predetermined threshold value. In step S112, when the number of items of the search is not equal to or higher than the threshold value, that is, when the number of items of the search does not satisfy the threshold value, the process proceeds to step S108, x is incremented by 1, and the process returns to step S102. On the other hand, when it is determined in step S112 that the number of items of the search is equal to or higher than the threshold value, the process proceeds to step S114, and the unification of the error substitution is presented to the administrator.

In the following step S116, it is determined whether the administrator has instructed the unification of the error substitution. When the unification is not instructed, the process proceeds to step S108, x is incremented by 1, and the process returns to step S102. On the other hand, when it is determined in step S116 that the administrator has instructed the unification of the error substitution, the process proceeds to step S118, and a record including the new error substitution E, the condition C, and the processing parameter that is a wild card is registered in the database. Further, in the following step S120, the error substitution E is stored in the additional error substitution list M, the process proceeds to step S108, x is incremented by 1, and the process returns to step S102.

When x is incremented by such processing, it is finally determined in step S102 that x ≤ N is not satisfied, and the processing of the number of items of the registration N is ended. When it is determined in step S102 that x ≤ N is not satisfied, the process proceeds to step S122, the database is sequentially searched for each condition included in the condition list L, records in which error substitutions are not included in the additional error substitution list M among search results are deleted, and the process is ended. As a result, the database in which the error substitutions are unified as shown in Fig. 17 is formed.

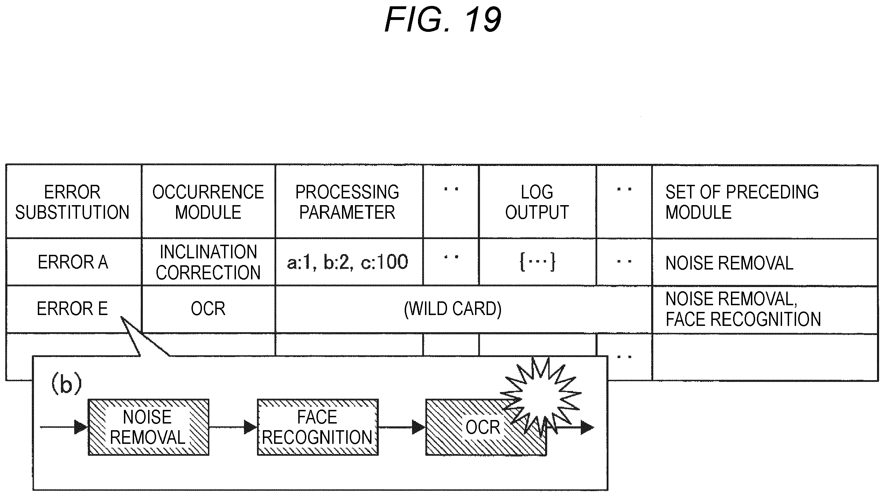

Figs. 19 to 21 show a seventh exemplary embodiment.

In the seventh exemplary embodiment, it is checked whether an error occurs before a job flow is executed.

As shown in Fig. 19, the error E is registered in the database. The occurrence module of the error E is OCR, while the set of the preceding module is noise removal and face recognition. Therefore, the error E indicates that an error has occurred in the OCR when a job flow including noise removal → face recognition → OCR is executed.

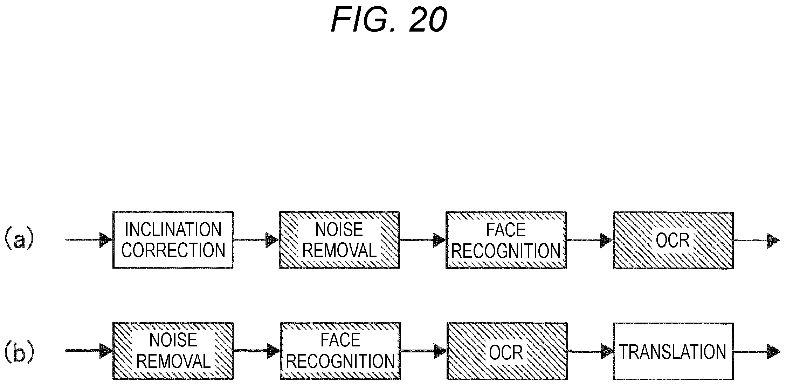

That is, as shown in (a) of Fig. 20, since noise removal → face recognition → OCR is included in a job flow of inclination correction → noise removal → face recognition → OCR →, the error E is corresponded, and an error may occur in the OCR. As shown in (b) of Fig. 20, since noise removal → face recognition → OCR is also included in a job flow of noise removal → face recognition → OCR → translation →, the error E is corresponded, and an error may occur in the OCR.

In the seventh exemplary embodiment, before the job flow is executed, it is checked whether a combination of modules corresponding to the list of the error substitution information (information other than the modules is registered as a wild card) is present in the job flow, and an error substitution is notified when a corresponding occurrence module and a corresponding set of the preceding module are included in the job flow definition.

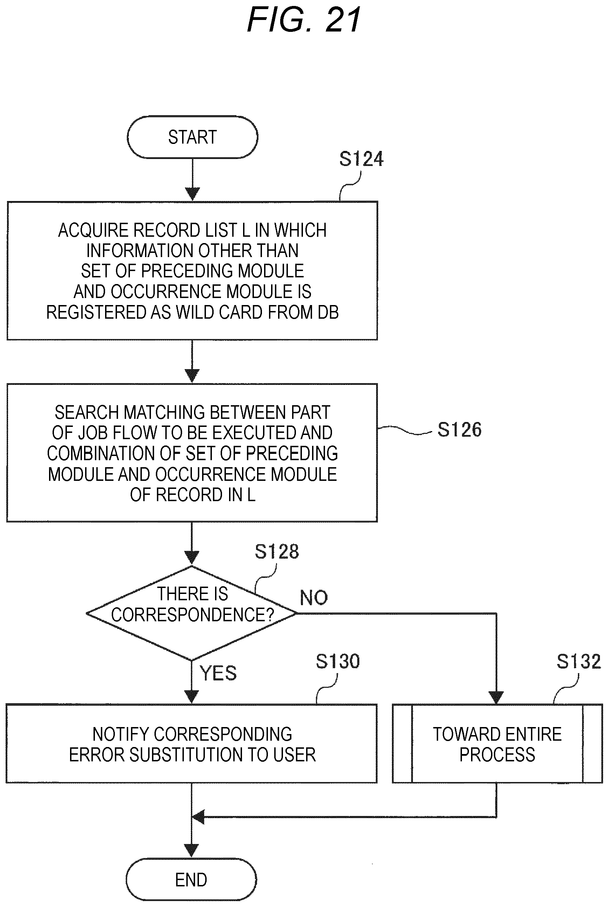

Fig. 21 shows an operation flow of the seventh exemplary embodiment.

First, in step S124, the record list L, in which the information other than the set of the preceding module and the occurrence module is registered as the wild card, is acquired from the database. In the following step S126, matching is searched between a part of the job flow to be executed and the set of the preceding module and the occurrence module of the record in L.

In the following step S128, it is determined whether any part of the job flow to be executed corresponds to the set of the preceding module and the occurrence module of the record in L. When it is determined that there is correspondence, the process proceeds to step S130, a corresponding error substitution is notified to the user, and the process is ended. On the other hand, when it is determined in step S128 that there is no correspondence, the process proceeds to step S132, a flow of an entire process shown in Fig. 4 is executed, and then the process is ended.

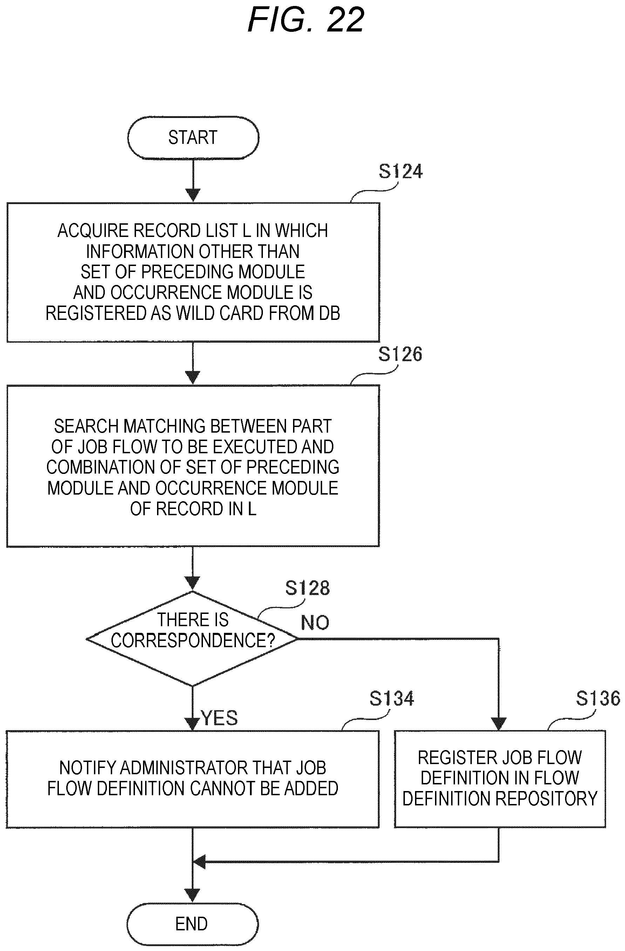

Fig. 22 shows an operation flow of an eighth exemplary embodiment.

In the eighth exemplary embodiment, it is checked whether an error occurs before a job flow definition is registered.

As compared with the seventh exemplary embodiment, the eighth exemplary embodiment is provided with step S134 and step S136 instead of step S130 and step S132 of the seventh exemplary embodiment.

That is, in a case where the job flow definition is created, when it is determined in step S128 that there is correspondence, the process proceeds to step S134, the administrator is notified that the job flow definition cannot be added, and then the process is ended. That is, the addition of the job flow definition is prohibited. On the other hand, when it is determined in step S128 that there is no correspondence, the process proceeds to step S136, the job flow definition is registered in the flow definition repository (see Fig. 3), and then the process is ended.

In the eighth exemplary embodiment, the same steps as those in the seventh exemplary embodiment are denoted by the same reference numerals in Fig. 22, and description thereof will be omitted.

In the eighth exemplary embodiment, the addition of the job flow definition is prohibited, while a warning may be issued to the user or the administrator.

In each of the exemplary embodiments described above, the failure information provided to the user is not limited to what is described above, and may also be any information on the failure.

In each of the above embodiments, the term "processor" refers to a processor in a broad sense, and examples of the processor include general processors (for example, a central processing unit (CPU)) and a dedicated processor (for example, a graphics processing unit (GPU), an application specific integrated circuit (ASIC), a field-programmable gate array (FPGA), and a programmable logic device).

Operations of the processor in each of the above exemplary embodiments may be implemented not only by one processor but also by cooperation of plural processors existing at physically separated positions. An order of the operations of the processor is not limited to the order described in the above exemplary embodiments, and may also be changed as necessary.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention defined by the following claims and their equivalents.

### [Explanations of reference numerals]

- 10: information processing system
- 12: server
- 14, 14: personal computer
- 16: image forming device
- 18: network
- 20: image reading device
- 24: memory
- 26: storage device
- 28: input and output interface
- 30: communication interface
- 32: bus
- 34: job flow definition management unit
- 36: flow definition repository
- 38: job flow management unit
- 40: job flow development unit
- 42: processing function management unit
- 44: document repository
- 46: job flow definition generation unit
- 48: job flow control unit
- 50: error occurrence detection unit
- 52: error notification unit
- 54: error substitution analysis unit
- 56: error substitution management unit
- 58: job history management unit
- 60: plug-in registration unit

## Claims

1. An information processing device comprising:
a processor, wherein
the processor is configured to:
store failure information;
when a failure occurs in a series of processes executed in accordance with a definition of an order of a plurality of unit processing units, present failure information corresponding to the occurred failure among the failure information stored in the processor to a user; and
when the failure information stored in the processor does not include failure information corresponding to the occurred failure, associate a unit processing unit where the failure has occurred and a unit processing unit preceding the unit processing unit where the failure has occurred with each other to be stored in the processor as a new failure information.

2. The information processing device according to claim 1, wherein, when the failure information stored in the processor includes a predetermined number, which is an integer of two or more, or more pieces of failure information in which a unit processing unit where the failure has occurred is same among the predetermined number or more pieces of failure information and a unit processing unit preceding the unit processing unit where the failure has occurred is same among the predetermined number or more pieces of failure information, the processor unifies the predetermined number or more pieces of failure information.

3. The information processing device according to claim 2, wherein
the failure information includes information on failure occurrence status of the unit processing unit where the failure has occurred, and input information of the unit processing unit where the failure has occurred, and
when the failure information stored in the processor includes a predetermined number, which is an integer of two or more, or more pieces of failure information in which a unit processing unit where the failure has occurred is same among the predetermined number or more pieces of failure information, a unit processing units preceding the unit processing unit where the failure has occurred is different among the predetermined number or more pieces of failure information, and the information on failure occurrence status and the input information are same among the predetermined number or more pieces of failure information, the processor unifies the predetermined number or more pieces of failure information.

4. The information processing device according to claim 1, wherein, before executing the series of processes, the processor searches whether the definition includes a same definition as the failure information in which the unit processing unit where the failure has occurred and the unit processing unit preceding the unit processing unit where the failure has occurred are associated with each other, and presents a result of the search to the user.

5. The information processing device according to claim 1, wherein, when the definition of the order of the plurality of unit processing units is registered, the processor searches whether the definition includes a same definition as the failure information in which the unit processing unit where the failure has occurred and the unit processing unit preceding the unit processing unit where the failure has occurred are associated with each other, and presents a result of the search to the user.

6. The information processing device according to claim 1, wherein, when a definition of a combination of the plurality of unit processing units is registered, the processor searches whether the definition includes a same definition as the failure information in which the unit processing unit where the failure has occurred and the unit processing unit preceding the unit processing unit where the failure has occurred are associated with each other, and prohibits reception of processing from the user when a result of the search indicates that the failure information is included.

7. A program causing a computer to execute a process, the process comprising:
storing failure information;
when a failure occurs in a series of processes executed in accordance with a definition of an order of a plurality of unit processing units, presenting failure information corresponding to the occurred failure among the stored failure information to a user, and
when the stored failure information does not include failure information corresponding to the occurred failure, associating a unit processing unit where the failure has occurred and a unit processing unit preceding the unit processing unit where the failure has occurred with each other to be stored as new failure information.

8. An information processing method comprising:
storing failure information;
when a failure occurs in a series of processes executed in accordance with a definition of an order of a plurality of unit processing units, presenting failure information corresponding to the occurred failure among the stored failure information to a user, and
when the stored failure information does not include failure information corresponding to the occurred failure, associating a unit processing unit where the failure has occurred and a unit processing unit preceding the unit processing unit where the failure has occurred with each other to be stored as new failure information.
